# EUROPÄISCHE PATENTSCHRIFT

(11) **EP 0 385 191 B1**
(45) Veröffentlichungstag und Bekanntmachung des Hinweises auf die Patenterteilung: **31.08.1994**
(21) Anmeldenummer: 90102942.1
(22) Anmeldetag: 15.02.1990
(51) Int. Cl.: B60R 5/04

(54) **Laderaumabdeckvorrichtung für Kraftwagen, insbesondere für Kombinations-Personenkraftwagen**
Loading space covering device for motor vehicles, especially for estate cars
Toiture amovible pour une plate-forme de chargement d'un véhicule, en particulier pour une fourgonnette

(30) Priorität: 28.02.1989 DE 3906196
(43) Veröffentlichungstag der Anmeldung: 05.09.1990
(73) Patentinhaber: PETER BUTZ GmbH & Co Verwaltungs-KG, 40764 Langenfeld (DE)
(72) Erfinder: Butz, Eugen Otto, D-4010 Hilden (DE)
(74) Vertreter: Ostriga, Harald

(56) Entgegenhaltungen:
- EP-A- 0 345 438
- DE-A- 3 314 444
- DE-U- 7 500 822
- DE-U- 7 805 453
- FR-A- 1 372 826
- US-A- 4 480 675
- US-A- 4 587 695

## Beschreibung

Die Erfindung betrifft eine Laderaumabdeckung für Kraftwagen, insbesondere für Kombinations-Personenkraftwagen, entsprechend dem Oberbegriff des Patentanspruchs 1. Eine solche Laderaumabdeckung ist durch die FR-A-1 372 826 bekanntgeworden.

Die Laderaumabdeckung gemäß der FR-A-1 372 826 ist für Lastkraftwagen bestimmt und weist etliche im Axialabstand hintereinander angeordnete Tragestäbe in Form von Spriegel-Bügeln auf. Die Fußbereiche (Führungsenden) der Spriegel-Bügel sind in etwa C-förmig hinterschnittenen Führungskanälen zweier an den Laderaum-Seitenbracken befestigten Führungsschienen in Verschieberichtung (Fahrtrichtung) beweglich geführt. Zugleich ist gewährleistet, daß die rollenartig ausgebildeten Führungsenden der bekannten Laderaumabdeckvorrichtung gegen Auszug gesichert sind.

In Offenstellung der bekannten Laderaumabdeckung sind die Führungsenden der Spriegel-Bügel gewissermaßen auf Block in je einem führungsschienenseitigen Magazinbereich zusammengeschoben, welcher sich auf der der hinteren Zugangsseite des Laderaums abgewandten vorderen Seite befindet. Die so gebildeten Magazinbereiche zur Aufnahme der zusammengeschobenen Laderaumabdeckung bilden je eine gesonderte Magazineinheit. Die beiden aus Führungsschienen-Abschnitten bestehenden Magazineinheiten können einschließlich der sie aufnehmenden Laderaumabdeckung aus ihrer Betriebsposition in eine Vertikalposition geklappt werden, in welcher die Laderaumabdeckung oben auf dem Dach der Fahrerkabine ruht. Hierzu sind die abklappbaren Magazineinheiten, d.h. die beiden Führungsschienen-Abschnitte, an ihren in Fahrtrichtung vorderen Enden über Gelenke mit den Seitenbracken des Laderaums verbunden.

In der veröffentlichen und gemäß Art. 54 (3) zu berücksichtigenden älteren europäischen Anmeldung EP-A0 345 438 sind im Unterschied zur Laderaumabdeckung gemäß der FR-A-1 372 826 die von den beiden Führungsschienen gebildeten Magazinbereiche einschließlich der von ihnen gehaltenen zusammengeschobenen Laderaumabdeckung insgesamt von den im Laderaum verbleibenden Führungsschienen trennbar und aus dem Laderaum entfernbar. Dies ist zweckmäßig, wenn längeres Ladegut befördert werden soll und die Laderaumabdeckung ein Umlegen der Fond-Sitzlehnen nach vorn behindern würde. Zur lösbaren Halterung der beiden herausnehmbaren Magazineinheiten weisen die im Fahrzeug raumfest verbleibenden Führungsschienen der EP-A-0 345 438 Verriegelungsvorrichtungen auf.

Ausgehend von der eingangs beschriebenen Laderaumabdeckung der FR-A-1 372 826, liegt der Erfindung die Aufgabe zugrunde, eine leicht lösbare funktionssichere Verriegelung der Magazineinheiten an den Führungsschienen zu entwickeln. Diese Aufgabe wird entsprechend der Erfindung dadurch gelöst, daß die Magazineinheit unterseitig vorspringende Riegelhaken aufweist, welche einen die Magazineinheit untergreifenden führungsschienenseitigen Boden in Einstecklöchern durchgreifen und welche mittels eines ihre Hakenenden übergreifenden Schieberiegels verriegelbar sind.

Vorteilhafte Weiterentwicklungen der Erfindung ergeben sich aus den Unteransprüchen.

In den Zeichnungen sind bevorzugte Ausführungsbeispiele entsprechend der Erfindung dargestellt, es zeigen,
Fig. 1 eine schematische perspektivische Darstellung einer geschlossenen Laderaumabdeckvorrichtung unter Weglassung jeglicher Karrosseriebereiche,
Fig. 2 in Anlehnung an die Darstellung gemäß Fig. 1 die völlig geöffnete Laderaumabdeckvorrichtung mit herausgelösten, die Laderaum-Abdeckung tragenden Magazineinheiten,
Fig. 3 eine abgebrochen dargestellte, teilweise Draufsicht auf eine andere Ausführungsform einer Laderaumabdeckvorrichtung (wiederum unter Weglassung jeglicher Karosserieteile),
Fig. 4 eine Seitenansicht, teilweise geschnitten, entsprechend dem mit IV bezeichneten Ansichtsteil in Fig. 3,
Fig. 5 eine Schnittdarstellung in natürlicher Größe, jedoch gegenüber der Darstellung gemäß Fig. 3 vergrößert, etwa gemäß der mit V-V bezeichneten Schnittlinie in Fig. 3 und
Fig. 6 in Anlehnung an Fig. 5 eine Seitenansicht mit einer aus ihrer Befestigungsposition herausgelösten Magazineinheit.

In den Zeichnungen sind die Laderaumabdeckvorrichtungen beider Ausführungsformen gemeinsam insgesamt mit der Bezugsziffer 10 bezeichnet.

Die Laderaumabdeckvorrichtung 10 weist eine in Öffnungsrichtung a verschieblich zusammenfaltbare und in entgegengesetzter Schließrichtung b streckbare Laderaum-Abdekkung 11 z.B. aus textilem beschichteten flexiblem Werkstoff auf.

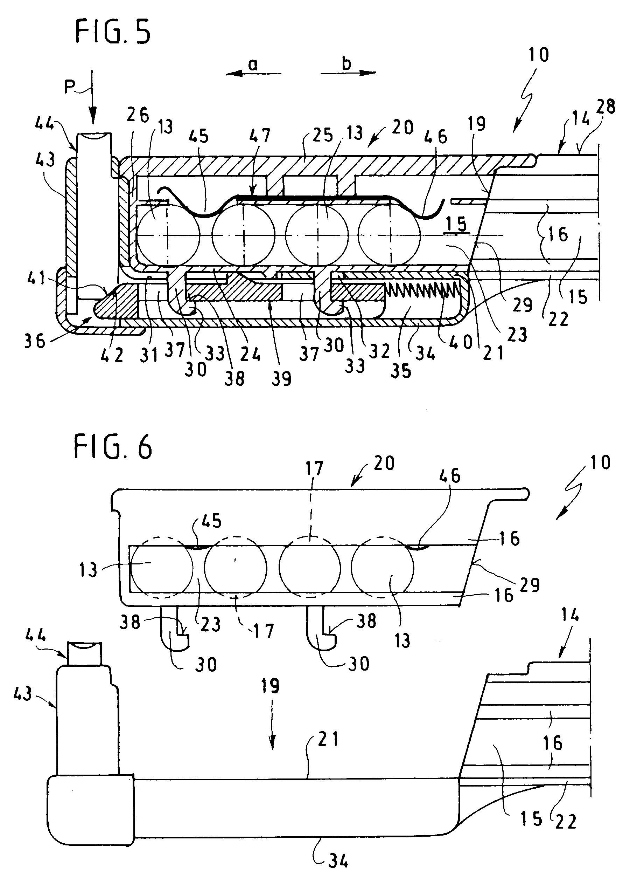

An der Laderaum-Abdeckung 11 sind voneinander distanziert befestigte, quer zur Verschieberichtung a, b verlaufende Tragestäbe 12 angeordnet. Deren beide Führungsenden 13, welche z.B. als schematisch dargestellte Rollen (vgl. Fig. 5 und 6) ausgebildet sein können, befinden sich innerhalb zweier sich in Verschieberichtung a, b erstreckender Führungsschienen 14, die seitlich in nicht dargestellter Weise karosserieinnenseitig befestigt sind.

Die Führungsschienen 14 beinhalten C-förmig hinterschnittene, sich in Längsrichtung a, b erstreckende Führungshohlräume 15. Innerhalb dieser Führungshohlräume 15 sind die Führungsenden 13 der Tragestäbe 12 in Verschieberichtung a, b beweglich, in Achsrichtung x der Tragestäbe 12 aber auszugsgesichert. Und zwar hintergreifen die Führungsrollen 13 die Flansche 16 der C-förmig hinterschnittenen Führungsschienen 14 innen mit gestrichelt angedeuteten Randbereichen 17 zugfest.

Die Zugangsseite des nicht dargestellten Kraftwagen-Laderaums ist mit Z bezeichnet.

An ihren der Zugangsseite Z abgewandten bzw. der Fondseite F zugewandten Enden weisen die Führungsschienen 14 Aussparungen 18 (taschenförmig) bzw. Aussparungen 19 auf. Die Aussparungen 18, 19 dienen jeweils der Aufnahme einer leicht lösbar befestigten einsatzartigen Magazineinheit 20.

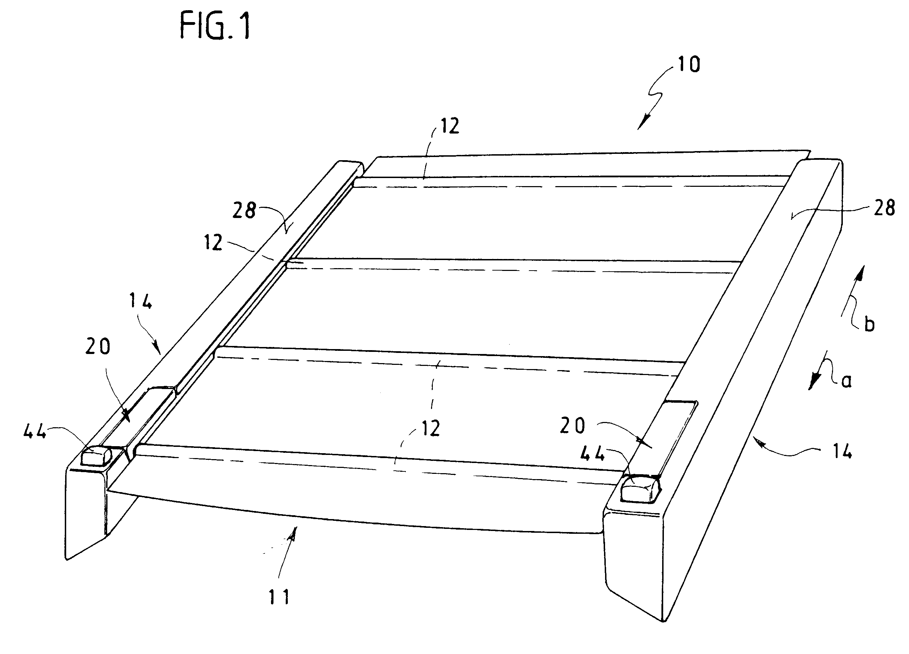

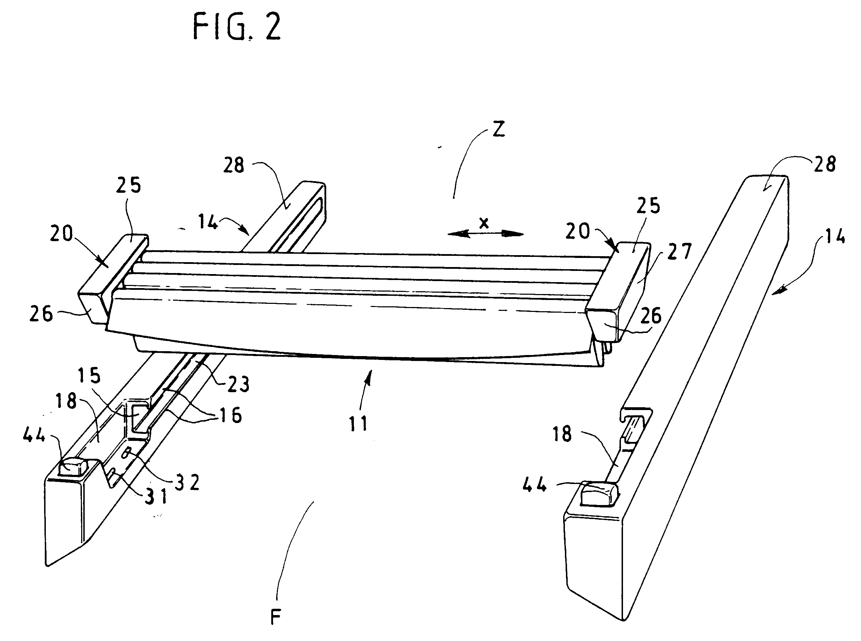

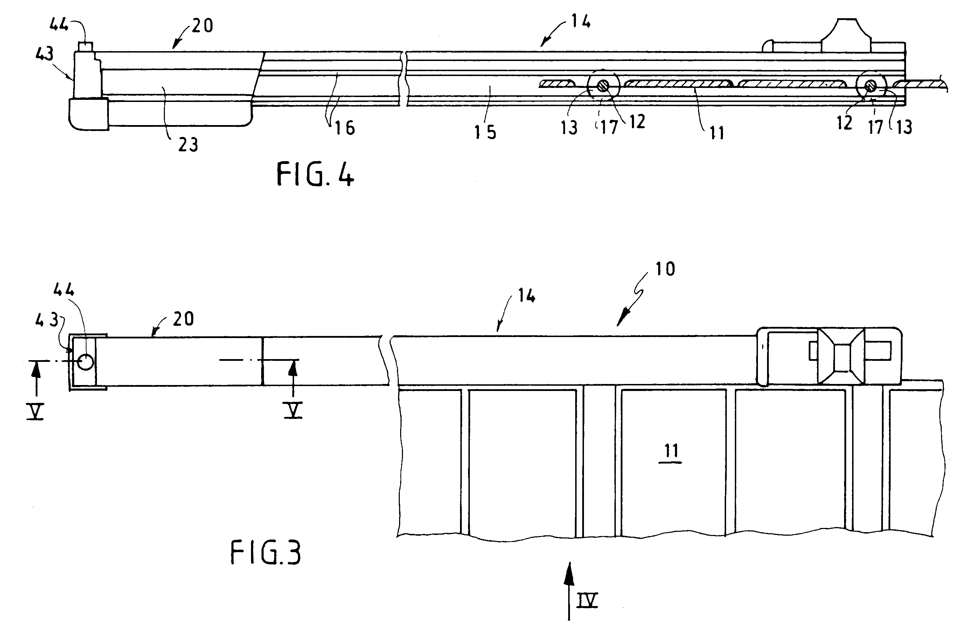

Die Figuren 1 sowie 3-5 zeigen die Magazineinheiten 20 in ihrer jeweiligen Befestigungsposition, während aus den Figuren 2 und 6 die herausgelöste Position der Magazine 20 zu ersehen ist.

Die Magazineinheit 20 ist auf einem sie untergreifenden Boden 21 der jeweiligen Führungsschiene 14 abgestützt. Hierbei bildet der Boden 21 eine Verlängerung des Bodens 22 der übrigen Führungsschiene 14. Die tragestabseitigen Führungsenden 13 sind auf dem Boden 22 der Führungsschiene 14 und auf einem um Werkstoffdicke höherversetzten Magazinboden 24 geführt.

Die Magazineinheit 20 selbst bildet analog zum Führungshohlraum 15 der Führungschiene 14 einen ebenfalls mit 15 bezeichneten Führungshohlraum, welcher ebenfalls C-förmig hinterschnitten ist und auch diesbezügliche Flansche 16 aufweist. Die Einführ- bzw. Einlauföffnung des magazinseitigen Hohlraums 15 ist mit 29 bezeichnet.

Ebenso wie bei den Führungsschienen 14 begrenzen auch die Flansche 16 der Magazineinheit 20 einen Führungsschlitz 23, von dem sich die Führungsenden 13 und daran anschließend die zugeordneten Tragstäbe 12 selbst jeweils zur Mitte der Anordnung hin erstrecken.

Die Magazineinheit 20, welche im wesentlichen schachtelförmig ausgebildet und praktisch nur an ihrer Einlauföffnung 29 geöffnet ist, weist außer dem Magazinboden 24 einen Magazinabdeckbereich 25, eine stirnseitige Rückwand 26 sowie schließlich eine Außenwand 27 auf.

Der Magazin-Abdeckbereich 25 ist oben außen in der Befestigungsposition des Magazins 20 mit der jeweils angrenzenden oberen Ansichtsfläche 28 der zugehörigen Schiene 14 bündig.

Wie insbesondere aus Fig. 5 ersichtlich, ragen vom Magazinboden zwei Riegelhaken 30 vor, welche den führungsschienenseitigen Boden 21 in einem schlitzartigen Einsteckloch 31 und außerdem in einem enger bemessenden Einsteckloch 32 durchsetzen. Hierbei greifen die freien Hakenenden 33 der Riegelhaken 30 in einen führungsschienenseitig gebildeten, unten von einem schalenförmigen Bereich 34 begrenzten Führungsraum 35 ein. In diesem Führungsraum 35 ist ein Schieberiegel 36 entlang der Verschieberichtung a, b translatorisch hin und her beweglich.

Der Schieberiegel 36 weist zwei Riegellöcher 37 auf, die von den Riegelhaken 30 durchgriffen sind. In der in Fig. 5 dargestellten Verriegelungsstellung übergreift der Schieberiegel 36 die Hakenenden 33, so daß die Hakensperrflächen 38 dicht an der Riegelunterfläche 39 anliegen.

Die Entriegelungsbewegung des Schieberiegels 36 erfolgt in Richtung b entgegen der Rückstellkraft einer Schraubendruckfeder 40 wie folgt: Der Schieberiegel 36 weist endstirnseitig eine schräg zur Verschieberichtung a, b vom Boden 21 bzw. vom schalenförmigen Bereich 34 wegweisende Steuerfläche 41 auf. Die Steuerfläche 41 liegt plan an einer ebenen Gegensteuerfläche 42 an. Diese ist Bestandteil einer senkrecht zur Verschieberichtung a, b betätigbaren und in einem schachtartigen Endbereich 43 der Führungsschiene 14 geführten Drucktaste 44. Falls also beide Drucktasten 44 der Vorrichtung 10 mit dem Druck P betätigt und nach unten bewegt werden, bewegen sich die Schieberiegel 36 in Richtung b nach rechts, geben die Hakenenden 33 frei, worauf die in den beiden Magazinen 20 mit den beidseitigen Führungsenden ihrer Tragestäbe 12 aufgenommene Abdeckung 11 (die Abdekkung 11 ist in den Fig. 5 und 6 nicht eingezeichnet) nach oben herausgenommen werden kann, wie in Fig. 6 angedeutet.

In der in den Fig. 5 und 6 dargestellten Offenstellung der Laderaumabdeckvorrichtung 10 verhindert eine mit konvexen Buckeln 45, 46 in den Führungshohlraum 15 des Magazins 20 hineinragende Blattfeder 47 ein unbeabsichtigtes Herausgleiten der Führungsenden 13 in Richtung b. Anhand von Fig. 5 ist vorstellbar, daß infolge Zugwirkung in Richtung b an der Abdeckung 11 die in Richtung b aufeinanderfolgenden drei Führungsenden 13 unter dem Buckel 46 hinweggleiten können, während der Buckel 45 die in Schließrichtung a vorderste Tragstange 12 an deren Führungsenden 13 festhält. Der Buckel 45 kann auch durch einen festen, über ein gesondertes Bedienungsorgan betätigbaren, nicht dargestellten Riegel ersetzt sein.

Es ist auch denkbar, den Magazinabdeckbereich 25 deckelartig entfernbar auszubilden und über nicht dargestellte Verbindungsmittel, wie Federrastzungen, Schrauben od.dgl. mit dem übrigen Magazinkörper lösbar zu verbinden.

## Patentansprüche

1. Laderaumabdeckvorrichtung (10) für Kraftwagen, insbesondere für Kombinations- Personenkraftwagen, mit einer in Öffnungsrichtung (a) verschieblich zusammenfaltbaren und in entgegengesetzter Schließrichtung (b) streckbaren Abdeckung (11), an welcher voneinander distanziert befestigte, quer zur Verschieberichtung (a; b) verlaufende Tragestäbe (12) angeordnet sind, deren beider Führungsenden (bei 13) innerhalb zweier sich in Verschieberichtung (a; b) erstreckenden seitlichen, karosserieseitig befestigten Führungsschienen (14) in Verschieberichtung (a; b) beweglich und in Tragestab-Längsrichtung (x) unverschieblich aufgenommen sind, wobei an gegenüberliegenden Enden der beiden Führungsschienen (14) je ein Magazinbereich vorgesehen ist, in weichem die Tragestangen-Führungsenden (13) bei geöffneter Laderaumabdeckung (11) in einer zusammengeschobenen Position in Verschieberichtung (a; b) lösbar gehalten sind, wobei beide einander gegenüberliegenden Magazinbereiche der beiden Führungsschienen (14) je eine gesonderte Magazineinheit (20) bilden, welche endstirnseitig an je einer Führungsschiene (14) leicht lösbar befestigt ist,
dadurch gekennzeichnet, daß die Magazineinheit (20) unterseitig vorspringende Riegelhaken (30) aufweist, welche einen die Magazineinheit (20) untergreifenden führungsschienen seitigen Boden (21) in Einstecklöchern (31, 32) durchgreifen und welche mittels eines ihre Hakenenden (33) übergreifenden Schieberiegels (36) verriegelbar sind.

2. Laderaumabdeckvorrichtung nach Anspruch 1, dadurch gekennzeichnet, daß unterhalb des Bodens (21) ein Führungsraum (35) für einen in Verschieberichtung (a, b) linear beweglichen Schieberiegel (36) vorgesehen ist, dessen Riegellöcher (37) von den Riegelhaken (30) durchgriffen sind und welcher die Riegelhaken (30) in Verriegelungsstellung übergreift.

3. Laderaumabdeckvorrichtung nach Anspruch 2, dadurch gekennzeichnet, daß der Schieberiegel (36) in Entriegelungsrichtung (bei b) rückstellfederbelastet (bei 40) ist.

4. Laderaumabdeckvorrichtung nach Anspruch 3, dadurch gekennzeichnet, daß der Schieberiegel (36) endstirnseitig mit einer schräg zur Verschieberichtung (a, b) verlaufenden vom Boden (21) wegweisenden Steuerfläche (41) versehen ist, welche mittels einer Gegensteuerfläche (42) einer senkrecht zur Verschieberichtung (a, b) betätigbaren Drucktaste (44) zusammenwirkt.

5. Laderaumabdeckvorrichtung nach einem der Ansprüche 1 bis 4, dadurch gekennzeichnet, daß die Magazineinheit (20) einen zum Boden (21) parallelen, mit der oberen Ansichtsfläche (28) der zugehörigen Führungsschiene (14) bündigen Abdeckbereich (25) aufweist, welcher als gesondertes Teil deckelartig ausgebildet und am übrigen Körper der Magazineinheit (20) mittels Verschraubung, Verrastung od.dgl. lösbar gehalten ist.

## Claims

1. Cargo space cover device (10) for motor vehicles, particularly for estate cars, with a cover (11) which can be movably folded up in the direction of opening (a) and can be extended in the opposite direction of closure (b), on which bearing rods (12) which are fixed a distance apart from each other and run transversely to the direction of displacement (a; b) are arranged, the two guide ends (at 13) of which are located inside two guide rails (14) extending in the direction of displacement (a; b) and fixed laterally on the bodywork side, in a movable manner in the direction of displacement (a; b) and in an immovable manner in the bearing rod longitudinal direction (x), a storage area being provided at each of the opposite ends of the two guide rails (14), in which the bearing rod guide ends (13) are detachably retained in a telescoped position in the direction of displacement (a; b) when the cargo space cover (11) is opened, both mutually opposite storage areas of the two guide rails (14) each forming a separate storage unit (20) each of which is fixed to a guide rail (14) at the front end in a readily detachable manner, characterized in that the storage unit (20) has locking hooks (30) projecting on the underside which engage a base (21) on the guide rail side under the storage unit (20) in insertion holes (31, 32) and which can be locked by means of a slide bolt (36) overlapping their hook ends (33).

2. Cargo space cover device according to Claim 1, characterized in that a guide space (35) is provided under the base (21) for a slide bolt (36) which can move linearly in the direction of displacement (a, b), the bolt holes (37) of which are engaged by the locking hooks (30) and which overlaps the locking hooks (30) in the locked position.

3. Cargo space cover device according to Claim 2, characterized in that the slide bolt (36) is return spring-loaded (at 40) in the unlocking position (at b).

4. Cargo space cover device according to Claim 3, characterized in that the front end of the slide bolt (36) is provided with a control surface (41) facing away from the base (21) and running at an angle to the direction of displacement (a, b), which cooperates with a pushbutton (44) which can be operated at right angles to the direction of displacement (a, b) by means of a counter control surface (42).

5. Cargo space cover device according to one of Claims 1 to 4, characterized in that the storage unit (20) has a cover area (25) parallel to the base (21) and flush with the top front surface (28) of the associated guide rail (14), which is designed as a separate component and like a lid and is detachably mounted on the remaining body of the storage unit (20) by means of screws, latches or the like.

## Revendications

1. Dispositif (10) de couverture du volume de chargement pour véhicules à moteur, en particulier pour les véhicules à moteur particuliers à usage mixte du type break, avec un recouvrement (11) qui peut être replié dans le sens de l'ouverture (a) et déployé dans le sens opposé (b), celui de la fermeture, par coulissement, et sur lequel sont disposés des barreaux porteurs (12) fixés à distance l'un de l'autre et s'étendant dans le sens transversal au sens du coulissement (a ; b), dont les deux extrémités de guidage respectives (en 13) sont logées de manière coulissante dans le sens du coulissement (a ; b) et de façon inamovible dans le sens de la longueur (x) des barreaux porteurs à l'intérieur de deux profilés de guidage (14), qui s'étendent dans le sens du coulissement (a ; b) et sont fixés latéralement côté carrosserie, tandis qu'à chacune des extrémités des deux profilés de guidage (14) en regard est prévu un secteur servant de magasin, dans lequel les extrémités de guidage (13) des barreaux porteurs sont retenues de manière dissociable, lorsque le recouvrement (11) du volume de chargement est ouvert en une position repliée dans le sens du coulissement (a ; b), étant entendu que les deux secteurs de magasin placés l'un en face de l'autre, chacun dans l'un des deux profilés de guidage (14), forment chacun une unité de magasin (20) distincte qui est fixée, côté extrémité frontale, de manière aisément dissociable à l'un, respectivement l'autre des deux profilés de guidage (14),
caractérisé par le fait que l'unité de magasin (20) présente des crochets de verrouillage (30) qui font saillie sur sa face inférieure, qui traversent de part en part, par des trous d'insertion (31, 32), une âme (31) prévue côté profilé de guidage et placée en contact direct avec la face inférieure de l'unité de magasin (20), et qui peuvent être verrouillées au moyen d'un curseur de verrou (36) venant attaquer par le haut leurs extrémités (33) de crochet.

2. Dispositif de couverture du volume de chargement suivant la revendication 1,
caractérisé par le fait qu'en dessous de l'âme (21) est prévue une cavité de guidage (35) pour un curseur de verrou (36) qui est linéairement mobile dans le sens du coulissement (a ; b), dont les lumières (37) de verrouillage sont traversées par les crochets de verrouillage (30) et qui, en position de verrouillage, attaque par le haut les crochets de verrouillage (30).

3. Dispositif de couverture du volume de chargement suivant la revendication 2,
caractérisé par le fait qu'en position de déverrouillage (vers b), le curseur de verrou (36) est placé sous l'action d'un ressort de rappel (40).

4. Dispositif de couverture du volume de chargement suivant la revendication 3,
caractérisé par le fait que sur son côté extrémité frontale, le curseur de verrou (36) est muni d'un pan de commande (41) qui s'étend en biais par rapport au sens du coulissement (a ; b) en s'éloignant de l'âme (21) et coopère avec une face de commande (42) d'un bouton-poussoir (44) qui peut être manoeuvré par pression à la perpendiculaire du sens de coulissement (a ; b).

5. Dispositif de couverture du volume de chargement suivant l'une des revendications 1 à 4,
caractérisé par le fait que l'unité de magasin (20) présente un secteur de plafond (25) qui, parallèle à l'âme (21) et se plaçant en affleurement avec la face (28) du profilé de guidage (14) lui correspondant, est réalisé sous d'une partie distincte à la manière d'un couvercle et est maintenu de façon dissociable au restant du corps de l'unité de magasin (20) au moyen d'un système à visser, à cranter ou similaire.
